(19) Europäisches Patentamt
European Patent Office
Office européen des brevets

(11) **EP 4 763 584 A1**

(12) **EUROPEAN PATENT APPLICATION**
published in accordance with Art. 153(4) EPC

(43) Date of publication:
**24.06.2026 Bulletin 2026/26**

(21) Application number: **24865090.5**

(22) Date of filing: **26.07.2024**

(51) International Patent Classification (IPC):
**B60L 15/20** (2006.01)

(52) Cooperative Patent Classification (CPC):
**B60L 15/20**

(86) International application number:
**PCT/JP2024/026849**

(87) International publication number:
**WO 2025/057583 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 JP 2023149679**

(71) Applicant: **Mitsubishi Jidosha Kogyo Kabushiki Kaisha**
**Tokyo 108-8410 (JP)**

(72) Inventors:
• **TAKAHASHI, Naoki**
  **Tokyo 108-8410 (JP)**
• **TAKAHASHI, Ryota**
  **Tokyo 108-8410 (JP)**
• **OKAMURA, Yutaro**
  **Tokyo 108-8410 (JP)**
• **ISHIHARA, Yuji**
  **Tokyo 108-8410 (JP)**
• **MATSUO, Shunsuke**
  **Tokyo 108-8410 (JP)**

(74) Representative: **Vossius & Partner**
**Patentanwälte Rechtsanwälte mbB**
**Siebertstraße 3**
**81675 München (DE)**

(54) **VEHICLE CONTROL DEVICE AND VEHICLE CONTROL METHOD**

(57)   A disclosed vehicle control device (10) performs feedback control for reducing a difference between an actual wheel speed and a target wheel speed, using a plant model including a driving side inertia moment ($J_{LM}$, $J_{RM}$) calculated based on an inertia moment ($J_M$) of a motor (2) that is a drive source of a vehicle (1), a spring damper designed with a rigidity ($K_S$) and a viscosity ($D_S$), and a load side inertia moment ($J_{LM}$, $J_{RM}$) having a magnitude corresponding to a vehicle body weight (M). The vehicle control device (10) includes a calculation unit (21) that calculates the load side inertia moment ($J_{LW}$, $J_{RW}$) based on a motor torque, and a motor angular velocity or a wheel speed, and a setting unit (22) that sets a correction value ($K_i$) of the feedback control in accordance with the load side inertia moment ($J_{LW}$, $J_{RW}$).

Fig. 1

**Description**

[Technical Field]

The present disclosure relates to a vehicle control device and a vehicle control method related to driving force control of a vehicle.

[Background Art]

One of the conventionally-known vehicle control devices that control a driving force of a vehicle performs feedback control so that a difference between an actual wheel speed and a target wheel speed is reduced. In the feedback control, for example, when the difference between the actual wheel speed and the target wheel speed increases, it is determined that the vehicle has entered a road surface (low $\mu$ road) having a low friction coefficient, and a driving torque is suppressed. Such control efficiently suppresses occurrence of slipping even when the friction coefficient of the road surface changes (see PTL 1).

[Citation List]

[Patent Literature]

[PTL 1]
JP 2019-103249 A

[Summary of Invention]

[Technical Problem]

On the other hand, when the vehicle enters a road surface (high $\mu$ road) having a high friction coefficient, the difference between the actual wheel speed and the target wheel speed does not increase as in a case where the vehicle continues to travel on the road surface having a low friction coefficient without slipping. For this reason, there is a problem that it takes time to release the suppression of a driving torque, which makes it difficult to obtain good responsiveness.
The present disclosure has been devised in view of such a problem and one of objects thereof is to provide a vehicle control method and a vehicle control method that can enhance the responsiveness in a feedback control. The object of the present disclosure should not be limited to this object and another object of the present disclosure is to achieve actions and effects which are derived from each configuration described in the following "Description of Embodiments" and which conventional techniques do not attain.

[Solution to Problem]

The disclosed invention can be embodied in the following aspects (application examples) and solves at least a part of the above problem. The aspects of aspect 2 and thereafter are each optionally and appropriately selected and can be omitted. This means that the aspects of aspect 2 and thereafter do not disclose an essential aspect or configuration. invention.
Aspect 1. The disclosed vehicle control device is a vehicle control device that performs feedback control for reducing a difference between an actual wheel speed and a target wheel speed, using a plant model including a driving side inertia moment calculated based on an inertia of a motor that is a drive source of a vehicle, a spring damper designed with a rigidity and a viscosity, and a load side inertia moment having a magnitude corresponding to a vehicle body weight of the vehicle. The vehicle control device includes a calculation unit that calculates the load side inertia moment based on a motor torque, and a motor angular velocity or a wheel speed, and a setting unit that sets a correction value of the feedback control in accordance with the load side inertia moment.
Aspect 2. In an aspect containing the above-described aspect 1, it is preferable that the setting unit increases an integral correction value as the load side inertia moment is larger.
Aspect 3. In an aspect containing the above-described aspect 1, it is preferable that the calculation unit calculates the load side inertia moment based on the motor torque, the motor angular velocity, and the wheel speed.
Aspect 4. In an aspect containing the above-described aspect 1, it is preferable that the vehicle control device further includes a slip calculation unit that calculates a slip state of the vehicle, and the setting unit sets an integral correction value in accordance with the slip state.
Aspect 5. In an aspect containing the above-described aspect 1, it is preferable that the setting unit calculates an apparent weight of a wheel and a drive system corresponding to the load side inertia moment, and sets an integral correction value having a magnitude corresponding to the apparent weight.

Aspect 6. In an aspect containing the above-described aspect 4, it is preferable that the setting unit sets an integral correction value having a magnitude proportional to the apparent weight in a range where the apparent weight is equal to or less than a predetermined value.

Aspect 7. The disclosed vehicle control method is a vehicle control method of performing feedback control for reducing a difference between an actual wheel speed and a target wheel speed, using a plant model including a driving side inertia moment calculated based on an inertia of a motor that is a drive source of a vehicle, a spring damper designed with a rigidity and a viscosity, and a load side inertia moment having a magnitude corresponding to a vehicle body weight of the vehicle. The vehicle control method includes calculating the load side inertia moment based on a motor torque, a motor angular velocity and a wheel speed, and setting a correction value of the feedback control in accordance with the load side inertia moment.

[Advantageous Effects of Invention]

According to the disclosed vehicle control device and vehicle control method, a load side inertia moment is calculated based on a motor torque, and a motor angular velocity or a wheel speed, and a correction value of feedback control is set in accordance with the load side inertia moment, so that the responsiveness of the feedback control can be enhanced.

[Brief Description of Drawings]

[Fig. 1]

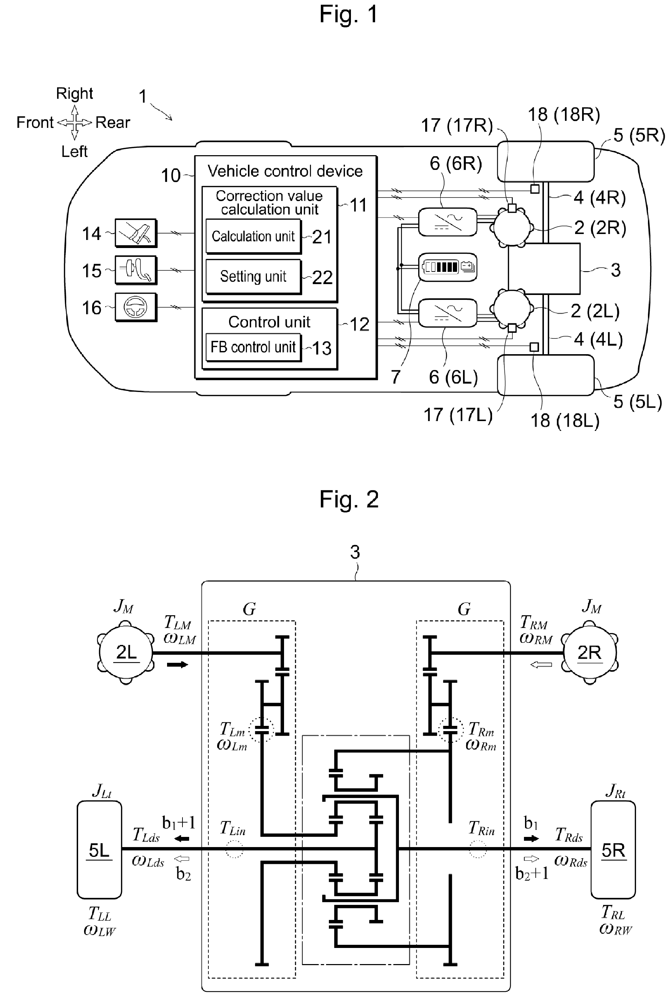

Fig. 1 is a block diagram of a vehicle to which a vehicle control device is applied.

[Fig. 2]
Fig. 2 is a schematic view illustrating an example of a structure of a drive system of a vehicle.

[Fig. 3]

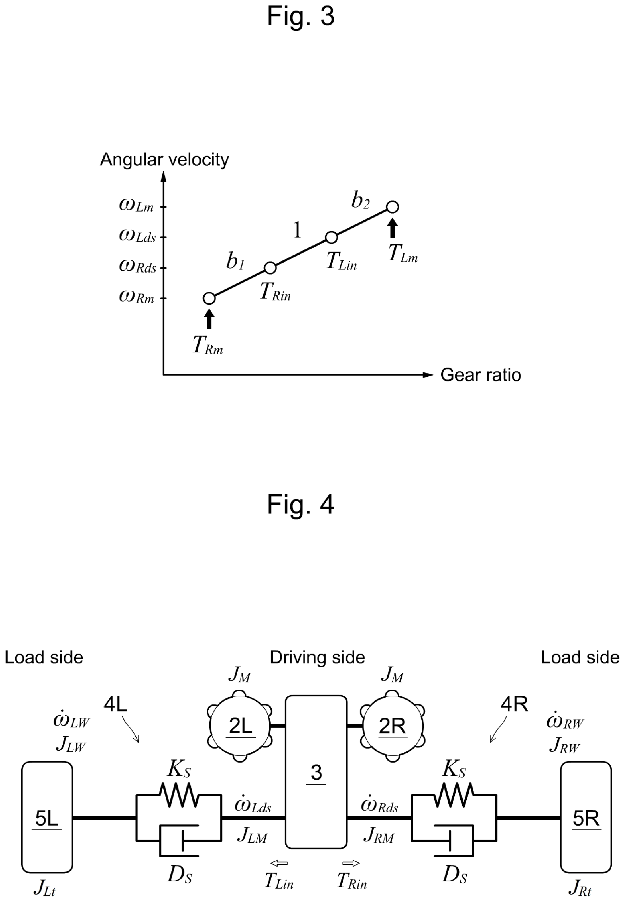

Fig. 3 is a speed diagram of a power distribution mechanism of a vehicle having the structure of Fig. 2.

[Fig. 4]
Fig. 4 is a schematic diagram illustrating configurations of a left drive system and a right drive system of the vehicle.

[Fig. 5]

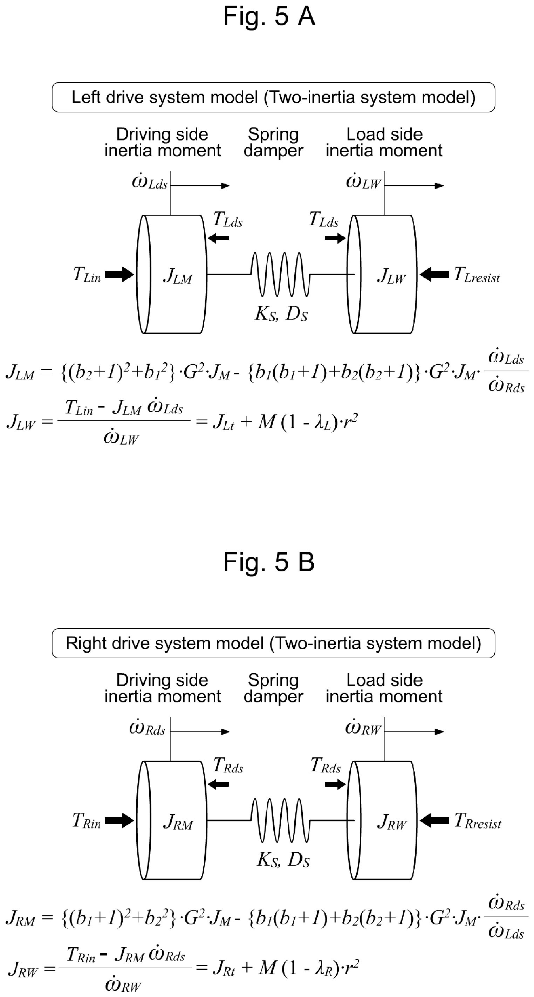

Fig. 5A is a schematic diagram illustrating a left drive system plant model, and Fig. 5B is a schematic diagram illustrating a right drive system plant model.

[Fig. 6]

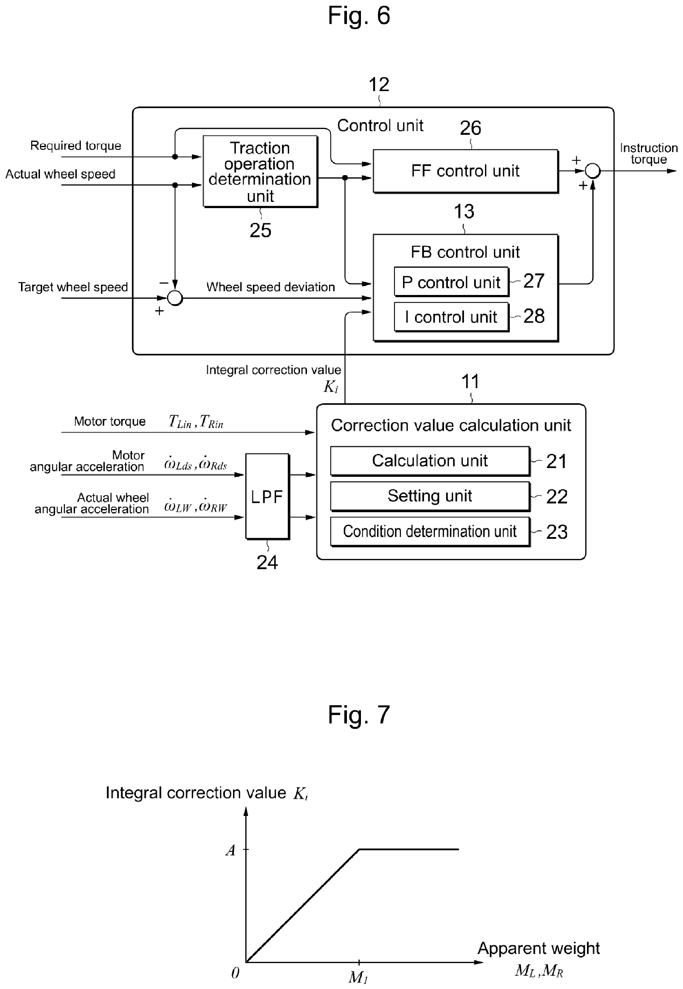

Fig. 6 is a block diagram illustrating functions (specific example of control) of a calculation unit and a control unit in Fig. 1.

[Fig. 7]
Fig. 7 is a graph showing a relationship between an apparent weight and an integral correction value.

[Description of Embodiments]

The type of vehicle in which the disclosed vehicle control device and vehicle control method are used is, for example, an engine vehicle (gasoline automobile, diesel automobile), an electric vehicle, or a hybrid vehicle. The disclosed embodiment is a vehicle including a mechanism capable of adjusting driving forces of at least a left wheel and a right wheel (in other words, the left and right wheels, that is, left and right drive wheels), and the types and number of drive sources (internal combustion engine, motor, and the like) are not limited.

The disclosed embodiment is applied to an automobile that travels by driving left and right wheels (left and right drive wheels) preferably using multiple drive sources. Here, one of the multiple drive sources is referred to as a left drive source, and one of the other drive sources is referred to as a right drive source. One of the left and right wheels located on the left side of the vehicle is referred to as a left wheel, and the other is referred to as a right wheel. The disclosed vehicle control device and vehicle control method can be used to control a vehicle including a left drive system including a left axle and a left wheel to which power from a left drive source is transmitted, and a right drive system including a right axle and a right wheel to which power from a right drive source is transmitted.

The layout of each of the left drive source and the right drive source may or may not be set to correspond to the left-right direction determined based on a traveling direction of the vehicle. In addition, the left drive system and the right drive system may operate independently of each other, or may be connected to each other via a transmission mechanism or a power distribution mechanism. The disclosed vehicle control device and vehicle control method can be utilized for control of an in-wheel motor vehicle in which each of the left and right wheels is driven by an individual motor, and can also be utilized for control of a torque vectoring vehicle in which the left and right wheels can transmit a driving force and a torque to each other.

1. Configuration

A vehicle control device 10 according to an embodiment is mounted on a vehicle 1 illustrated in Fig. 1. The vehicle 1 includes left and right wheels 5 (wheels) disposed lined up in the vehicle width direction, a power distribution mechanism 3 (differential mechanism) that applies a torque difference to the left and right wheels 5, and a pair of motors 2 connected to the power distribution mechanism 3. In the drawing of the embodiment, alphabets L and R attached to numerical symbols represent arrangement positions of elements represented by the respective symbols (on the left side or the right side of the vehicle 1). For example, the symbol 5L represents one (left wheel) of the left and right wheels 5 located on the left side of the vehicle 1, and the symbol 5R represents the other (right wheel) located on the right side. The positions of the left and right wheels 5 in the front-rear direction are not limited, and may be the front wheels or the rear wheels of the vehicle 1.

The motor 2 (drive source) has a function of driving at least either of the front wheels or the rear wheels of the vehicle 1, and can have a function of driving all the four wheels. One of the pair of motors 2 which is disposed on the left side is a left motor 2L (left drive source), and the other disposed on the right side is a right motor 2R (right drive source). The left motor 2L and the right motor 2R operate independently of each other, and can individually output driving forces of different magnitudes. These motors 2 are connected to the power distribution mechanism 3 via a pair of speed reduction mechanisms provided separately from each other.

The vehicle 1 includes the power distribution mechanism 3 that amplifies a torque difference between the pair of motors 2 and distributes the torque to the left and right wheels 5. The power distribution mechanism 3 of the present embodiment is a differential mechanism having a yaw control function (Active Yaw Control (AYC) function), and is interposed between an axle 4 (left axle 4L) connected to the left wheel 5L and an axle 4 (right axle 4R) connected to the right wheel 5R. The yaw control function is a function of adjusting the yaw moment by actively controlling a sharing ratio of the driving forces (driving torque) of the left and right wheels 5 and stabilizing the posture of the vehicle 1. A planetary gear mechanism, a differential gear mechanism, and the like are incorporated in the power distribution mechanism 3. A vehicle drive device including the pair of motors 2 and the power distribution mechanism 3 is also referred to as a Dual Motor AYC (DM-AYC) device.

As illustrated in Fig. 2, the power distribution mechanism 3 includes a pair of speed reduction mechanisms (gear trains surrounded by broken lines in Fig. 2) that reduce the rotational speed of the motors 2, and a transmission mechanism (gear trains surrounded by an alternating dotted-dashed line in Fig. 2). The speed reduction mechanisms are each a mechanism that increases a torque by decelerating the speed of motor torque (driving force) output from the motor 2. A reduction ratio G of the speed reduction mechanism is appropriately set in accordance with the output characteristics and performance of the motor 2. If the torque performance of the motor 2 is sufficiently high, the speed reduction mechanism may be omitted. The transmission mechanism is a mechanism that amplifies a torque difference to be transmitted to each of the left and right wheels 5.

The transmission mechanism of the power distribution mechanism 3 illustrated in Fig. 2 includes a pair of planetary gear mechanisms. These planetary gear mechanisms have a structure in which planetary gears provided in respective carriers and rotation axes thereof are connected to each other. Each carrier rotatably supports the planetary gear and supports the planetary gear to revolve around a sun gear. Driving forces transmitted from the left and right motors 2 are input to a ring gear and a sun gear of one planetary gear mechanism. The driving forces to be transmitted to the left and right wheels 5 are extracted from a sun gear and a carrier of the other planetary gear mechanism. The structure of the power distribution mechanism 3 illustrated in Fig. 2 is merely an example for implementing the yaw control function, and other known structures can be used.

In Fig. 2, $J_M$ represents a motor inertia moment (the moment of inertia of the motor 2), $J_{Lt}$ represents a left wheel inertia moment (the moment of inertia of the left wheel 5L), and $J_{Rt}$ represents a right wheel inertia moment (the moment of inertia of the right wheel 5R). Regarding the parameters of the left drive system, $T_{LM}$ is a left motor input torque (left motor instruction torque), $T_{Lm}$ is a left motor input torque after deceleration by a reduction mechanism, $\omega_{LM}$ is a left motor angular velocity, $\omega_{Lm}$ is a left motor angular velocity after deceleration by the reduction mechanism, $T_{Lin}$ is a left driving side torque, $T_{Lds}$ is a left axle torque, $T_{LL}$ is a left wheel load side torque, $\omega_{Lds}$ is a left driving side angular velocity, and $\omega_{LW}$ is a left wheel angular velocity (a target speed of the left wheel 5L). Similarly, regarding the parameters of the right drive system, $T_{RM}$ is a right motor input torque (right motor instruction torque), $T_{Rm}$ is a right motor input torque after deceleration by the reduction mechanism, $\omega_{RM}$ is a right motor angular velocity, $\omega_{Rm}$ is a right motor angular velocity after deceleration by the reduction mechanism, $T_{Rin}$ is a right driving side torque, $T_{Rds}$ is a right axle torque, $T_{RL}$ is a right wheel load side torque, $\omega_{Rds}$ is a right driving side angular velocity, and $\omega_{RW}$ is a right wheel angular velocity (a target speed of the right wheel 5R).

Fig. 3 is a speed diagram of the power distribution mechanism 3. In Figs. 2 and 3, $b_1$ and $b_2$ represent torque difference amplification factors (deceleration rate, differential deceleration ratio) determined in accordance with the structure of the gears incorporated in the power distribution mechanism 3. The torque difference amplification factor related to the power transmission from the left motor 2L to the right wheel 5R is $b_1$, and a torque difference amplification factor related to the power transmission from the left motor 2L to the left wheel 5L is $b_1+1$. The torque difference amplification factor related to the power transmission from the right motor 2R to the left wheel 5L is $b_2$, and a torque difference amplification factor related to the power transmission from the right motor 2R to the right wheel 5R is $b_2+1$.

As illustrated in Fig. 1, each of the pair of motors 2 is electrically connected to a battery 7 via an inverter 6 (6L, 6R). The inverter 6 is a conversion device (DC-AC inverter) that mutually converts power (DC power) of a DC circuit on the battery 7 side and power (AC power) of an AC circuit on the motor 2 side. The battery 7 is, for example, a lithium ion secondary battery or a nickel-metal hydride secondary battery, and is a secondary battery capable of supplying a high voltage direct current of several hundred volts. During power running of the motor 2, the DC power is converted into AC power by the inverter 6 and the converted AC power is supplied to the motor 2. During power generation by the motor 2, the generated power is converted into DC power by the inverter 6 and the converted DC power is charged in the battery 7. The operating state of the inverter 6 is controlled by the vehicle control device 10.

The vehicle control device 10 is one of electronic control devices (ECU, Electronic Control Unit) mounted on the vehicle 1. The vehicle control device 10 has a function of controlling output of each of the left motor 2L and the right motor 2R in the vehicle 1 including the left drive system including the left axle 4L and the left wheel 5L to which power from the left motor 2L (left drive source) is transmitted and the right drive system including the right axle 4R and the right wheel 5R to which power from the right motor 2R (right drive source) is transmitted.

The vehicle control device 10 incorporates a processor (central processing unit), a memory (main memory), a storage device (storage), an interface device, and the like (not illustrated), which are communicably connected to each other via an internal bus. The contents of determination and control performed by the vehicle control device 10 are recorded and saved, as firmware or an application program, in the memory and when the program is executed, the contents of the program are expanded in a memory space and executed by the processor.

To the vehicle control device 10, an accelerator opening sensor 14, a brake sensor 15, a steering angle sensor 16, a resolver 17, and a wheel speed sensor 18 are connected. The accelerator opening sensor 14 is a sensor that detects a depression amount (accelerator opening degree) of an accelerator pedal and a depression speed thereof. The brake sensor 15 is a sensor that detects a depression amount (brake pedal stroke) of a brake pedal and a depression speed thereof. The steering angle sensor 16 is a sensor that detects steering angle (actual tire-turning angles or a rotation angle of a steering wheel) of the left and right wheels 5.

The resolvers 17 (17L, 17R) are sensors that detect the speeds of the motors 2, and provided one for each of the pair of motors 2. The resolvers 17 output information of the rotation angles of the motors 2 in the form of two-phase AC voltages. The speed of the motor 2 is grasped from changes in the AC voltage over time. The wheel speed sensors 18 (18L, 18R) are sensors that detect the speeds of the axles 4. The vehicle control device 10 controls the output of the pair of motors 2 (2L, 2R) by controlling the operating state of the inverters 6 (6L, 6R) on the basis of pieces of information detected by the various sensors 14 to 18 mentioned above. Instead of the resolvers 17, another sensor (hall sensor, encoder, or the like) having a different internal structure and operation principle may be used.

2. Vehicle control device

As illustrated in Fig. 1, the vehicle control device 10 includes a plant model, a correction value calculation unit 11, and a control unit 12 as elements for controlling the driving forces of the left drive system and the right drive system. The control unit 12 includes at least an FB control unit 13 related to feedback control. These elements are illustrated by classifying the functions of the vehicle control device 10 for convenience. These elements may be described as independent programs for implementing the functions of the respective elements. Alternatively, multiple elements may be merged and described as one composite program.

The plant model is a model obtained by modeling each of the left drive system (a power transmission path from the left motor 2L to the left wheel 5L) and the right drive system (a power transmission path from the right motor 2R to the right wheel 5R) of the vehicle 1 in order to ascertain motion states of the left drive system and the right drive system . As illustrated in Fig. 4, the plant model includes a left drive system plant model obtained by modeling the left drive system and a right drive system plant model obtained by modeling the right drive system. Hereinafter, each of the left drive system plant model and the right drive system plant model is also simply referred to as a "model". The vehicle control device 10 has a function of performing feedback control using these models.

In Fig. 4, $J_{LM}$ represents an inertia moment on the power distribution mechanism 3 side (driving side) with respect to the left axle 4L, $J_{LW}$ represents an inertia moment on the left wheel 5L side (load side) with respect to the left axle 4L, $J_{RM}$ represents an inertia moment on the power distribution mechanism 3 side (driving side) with respect to the right axle 4R, $J_{RW}$ represents an inertia moment on the right wheel 5R side (load side) with respect to the right axle 4R, $J_{Lt}$ represents an inertia moment of the left wheel (the moment of inertia of the left wheel 5L alone), and $J_{Rt}$ represents an inertia moment of the right wheel (the moment of inertia of the right wheel 5R alone). Fig. 4 illustrates a differential value (left driving side angular acceleration) of the left driving side angular velocity $\omega_{Lds}$, a differential value (left wheel angular acceleration) of the left wheel angular velocity $\omega_{LW}$, a differential value (right driving side angular acceleration) of the right driving side angular velocity $\omega_{Rds}$, and a differential value (right wheel angular acceleration) of the right wheel angular velocity $\omega_{RW}$.

The model of the present embodiment is a model including driving side inertia moments $J_{LM}$ and $J_{RM}$ calculated based on the inertia moment $J_M$ (the moment of inertia, inertia) of the motor 2 that is a drive source of the vehicle 1, a spring damper designed with a rigidity (a spring of an axle rigidity $K_S$) and a viscosity (a damper of an axle viscosity $D_S$), and load side inertia moments $J_{LW}$ and $J_{RW}$ having a magnitude corresponding to the vehicle body weight M of the vehicle 1. Fig. 5A is a schematic diagram corresponding to the left drive system plant model, and Fig. 5B is a schematic diagram corresponding to the right drive system plant model.

As illustrated in Fig. 5A, the left drive system plant model is a two-inertia system model including the driving side inertia moment $J_{LM}$, the spring damper designed with the rigidity $K_S$ and the viscosity $D_S$, and the load side inertia moment (nominal inertia moment) $J_{LW}$. The driving side inertia moment $J_{LM}$ is calculated based on the inertia moment $J_M$ of the motor 2L that is the drive source of the vehicle 1. The load side inertia moment $J_{LW}$ has a value corresponding to, for example, the vehicle body weight M (converted based on wheel) and the actual slip ratio $\lambda_L$ of the left wheel 5L. A calculation formula of the driving side inertia moment $J_{LM}$ and a definition equation of the load side inertia moment $J_{LW}$ will be exemplified below.

[Math. 1]

Driving side inertia moment $J_{LM}$ of left drive system

$$J_{LM} = \{(b_2 + 1)^2 + b_1{}^2\}G^2 J_M$$

$$- \{b_1(b_1 + 1) + b_2(b_2 + 1)\}G^2 J_M \frac{\dot{\omega}_{Lds}}{\dot{\omega}_{Rds}} \qquad \text{Equation 1}$$

Load side inertia moment $J_{LW}$ of left drive system

$$J_{LW} = J_{Lt} + M(1 - \lambda_L)r^2 \qquad \text{Equation 2}$$

As illustrated in Fig. 5B, the right drive system plant model is also a two-inertia system model including the driving side inertia moment $J_{RM}$, the spring damper designed with the rigidity $K_S$ and the viscosity $D_S$, and the load side inertia moment (nominal inertia moment) $J_{RW}$. The driving side inertia moment $J_{RM}$ is calculated based on the inertia moment $J_M$ of the motor 2R. The load side inertia moment $J_{RW}$ has a value corresponding to, for example, the vehicle body weight M (converted based on wheel) and the actual slip ratio $\lambda_R$ of the right wheel 5R. A calculation formula of the driving side inertia moment $J_{RM}$ and a definition equation of the load side inertia moment $J_{RW}$ are exemplified below.

[Math. 2]

Driving side inertia moment $J_{RM}$ of right drive system

$$J_{RM} = \{(b_1 + 1)^2 + b_2{}^2\}G^2 J_M$$

$$- \{b_1(b_1 + 1) + b_2(b_2 + 1)\}G^2 J_M \frac{\dot{\omega}_{Rds}}{\dot{\omega}_{Lds}} \qquad \text{Equation 3}$$

Load side inertia moment $J_{RW}$ of right drive system

$$J_{RW} = J_{Rt} + M(1 - \lambda_R)r^2 \qquad \text{Equation 4}$$

The correction value calculation unit 11 calculates a correction value (feedback correction value) to be used in the feedback control. For example, if a feedback controlled variable includes an integral term, the correction value calculation unit 11 calculates an integral correction value. if the feedback controlled variable includes a proportional term, the correction value calculation unit 11 calculates a proportional correction value, and if the feedback controlled variable includes a differential term, the correction value calculation unit 11 calculates a differential correction value. The correction value calculation unit 11 includes at least a calculation unit 21 and a setting unit 22 for the calculation. The correction value calculated here is transmitted to the control unit 12. In the present embodiment, at least one correction value is set in accordance with the load side inertia moments $J_{LW}$ and $J_{RW}$.

The control unit 12 includes an FB control unit 13 that performs feedback control for reducing a difference (wheel speed deviation) between an actual wheel speed and a target wheel speed, using the plant model described above. The FB control unit 13 performs feedback control, using the correction value set by the setting unit 22 of the correction value calculation unit 11. Thereby, a friction coefficient of a road surface on which the vehicle 1 actually travels is accurately reflected in the feedback control, so that the responsiveness of the feedback control is improved.

3. Specific example

Fig. 6 is a block diagram illustrating specific control contents of the vehicle control device 10 including the correction value calculation unit 11 and the control unit 12. The correction value calculation unit 11 includes the calculation unit 21, the setting unit 22, and a condition determination unit 23. The control unit 12 is provided with a traction operation determination unit 25 and an FF control unit 26 in addition to the FB control unit 13 including a P control unit 27 and an I control unit 28.

The calculation unit 21 calculates the load side inertia moments $J_{LW}$ and $J_{RW}$ based on a motor torque output from the motor 2 and either one of a motor angular velocity or a wheel speed. The load side inertia moment $J_{LW}$ of the left drive system is calculated based on the following Equation 5, for example. When the load side inertia moments $J_{LW}$ and $J_{RW}$ are calculated using the motor angular velocity, a value detected by the resolver 17 may be used as the motor angular velocity or a value obtained by converting a value detected by the wheel speed sensor 18 into the motor angular velocity may be used.

[Math. 3]

$$J_{LW} = \frac{T_{Lin} - J_{LM}\dot{\omega}_{Lds}}{\dot{\omega}_{LW}} \qquad \text{Equation 5}$$

$J_{LW}$ : Load side inertia moment of left drive system
$J_{LM}$ : Driving side inertia moment of left drive system
$T_{Lin}$ : Left driving side torque
$\omega_{Lds}$ : Left driving side angular velocity
$\omega_{LW}$ : Left wheel angular velocity

Similarly, when the load side inertia moments $J_{LW}$ and $J_{RW}$ are calculated using a wheel speed, a value detected by the wheel speed sensor 18 may be used as the wheel speed, or a value obtained by converting a value detected by the resolver 17 into the wheel speed may be used. Alternatively, the load side inertia moments $J_{LW}$ and $J_{RW}$ may be calculated by using both the motor angular velocity detected by the resolver 17 and the wheel speed detected by the wheel speed sensor 18. A calculation equation of the load side inertia moment $J_{RW}$ of the right drive system will be exemplified below.

[Math. 4]

$$J_{RW} = \frac{T_{Rin} - J_{RM}\dot{\omega}_{Rds}}{\dot{\omega}_{RW}} \qquad \text{Equation 6}$$

$J_{RW}$ : Load side inertia moment of right drive system

$J_{RM}$ : Driving side inertia moment of right drive system
$T_{Rin}$ : Right driving side torque
$\omega_{Rds}$ : Right driving side angular velocity
$\omega_{RW}$ : Right wheel angular velocity

The values of the load side inertia moments $J_{LW}$ and $J_{RW}$ calculated by the calculation unit 21 change under the influence of a friction coefficient of a road surface. For example, when a wheel speed (motor angular velocity) increases on a road surface (low $\mu$ road) having a relatively small friction coefficient and then the wheel 5 slips, the vehicle body (vehicle 1) hardly accelerates and only the wheel 5 accelerates. Consequently, the values of the load side inertia moments $J_{LW}$ and $J_{RW}$ calculated by the calculation unit 21 decrease, and become substantially the same value as the inertias (the left wheel inertia moment $J_{Lt}$ and the right wheel inertia moment $J_{Rt}$) of the wheels 5.

In contrast, when the wheel speed (motor angular velocity) increases on a road surface (high $\mu$ road) having a relatively large friction coefficient and the wheels grip the road surface strongly, the vehicle body accelerates along with the wheels. Consequently, the values of the load side inertia moments $J_{LW}$ and $J_{RW}$ calculated by the calculation unit 21 increase, and become values including not only the inertia moments of the wheels 5 but also the inertia moment of the vehicle body (left drive system, right drive system). Thus, by referring to the values of the load side inertia moments $J_{LW}$ and $J_{RW}$ calculated by the calculation unit 21, it is accurately ascertain that the vehicle 1 has entered the low $\mu$ road from the high $\mu$ road or has entered the high $\mu$ road from the low $\mu$ road.

When the load side inertia moments $J_{LW}$ and $J_{RW}$ are calculated, it is preferable to use values having passes through an LPF 24 (low-pass filter) as values of the motor angular acceleration (the differential value of the left driving side angular velocity $\omega_{Lds}$ and the differential value of the right driving side angular velocity $\omega_{Rds}$) and the actual wheel angular acceleration (the differential value of the left wheel angular velocity $\omega_{LW}$ and a time differential value of the right wheel angular velocity $\omega_{RW}$). A cutoff frequency band of the LPF 24 is, for example, 10 Hz or more.

The setting unit 22 sets a correction value of the feedback control in accordance with the load side inertia moments $J_{LW}$ and $J_{RW}$ calculated by the calculation unit 21. For example, as the load side inertia moments $J_{LW}$ and $J_{RW}$ are larger, an integral correction value of the feedback control is increased to promote a fluctuation in an integral control input value (a value input to an arithmetic element of an integral term), thereby performing control for improving responsiveness. The responsiveness may be improved by decreasing a differential correction value of the feedback control as the load side inertia moments $J_{LW}$ and $J_{RW}$ are larger. Alternatively, the responsiveness may be enhanced by increasing a proportional correction value of the feedback control as the load side inertia moments $J_{LW}$ and $J_{RW}$ are larger. A relationship between the magnitudes of the load side inertia moments $J_{LW}$ and $J_{RW}$ and the magnitude of the correction value can be changed as appropriate.

The setting unit 22 of the present embodiment calculates apparent weights $M_L$ and $M_R$ of the wheels 5 and the drive systems corresponding to the load side inertia moments $J_{LW}$ and $J_{RW}$ on the basis of the following Equations 7 and 8, and sets integral correction values $K_i$ having magnitudes corresponding to the apparent weights $M_L$ and $M_R$. The apparent weight $M_L$ is a weight corresponding to the inertia moment of one left wheel 5L in the left drive system, and is a weight equivalent to a product of a value obtained by subtracting the actual slip ratio $\lambda_L$ of the left wheel 5L from 1 and the vehicle body weight M. Similarly, the apparent weight $M_R$ is a weight corresponding to the inertia moment of one right wheel 5R in the right drive system, and is a weight equivalent to a product of a value obtained by subtracting the actual slip ratio $\lambda_R$ of the right wheel 5R from 1 and the vehicle body weight M.

[Math. 5]

$$M_L = M(1 - \lambda_L) = \frac{J_{LW} - J_{Lt}}{r^2} \qquad \text{Equation 7}$$

$M$ : Vehicle body weight
$\lambda_L$ : Actual slip ratio of left wheel
$M_L$ : Apparent weight of left wheel and left drive system (weight equivalent to inertia of one left wheel)
$J_{LW}$ : Load side inertia moment of left drive system
$J_{Lt}$ : Inertia moment of left wheel
$r$ : Tire moving radius

$$M_R = M(1 - \lambda_R) = \frac{J_{RW} - J_{Rt}}{r^2} \qquad \text{Equation 8}$$

$M$ : Vehicle body weight

$\lambda_R$ : Actual slip ratio of right wheel
$M_R$ : Apparent weight of right wheel and right drive system (weight equivalent to inertia moment of one right wheel)
$J_{RW}$ : Load side inertia moment of right drive system
$J_{Rt}$ : Inertia moment of right wheel
$r$ : Tire moving radius

A slip calculation unit (not illustrated) that calculates the slip state of the vehicle 1 may be provided in the vehicle control device 10, and the actual slip ratios $\lambda_L$ and $\lambda_R$ of the right and left wheels 5 may be calculated by the slip calculation unit. The setting unit 22 can calculate the apparent weights $M_L$ and $M_R$ of the wheels 5 and the drive systems based on the actual slip ratios $\lambda_L$ and $\lambda_R$, using Equations 7 and 8 described above, and set the integral correction values $K_i$ having magnitudes corresponding to the apparent weights $M_L$ and $M_R$. Thus, the setting unit 22 can calculate the integral correction value in accordance with the slip state.

Fig. 7 is a graph showing a relationship between the apparent weight $M_L$, $M_R$ of the wheel 5 and the drive system and the integral correction value $K_i$. The values of the integral correction value $K_i$ is set to a magnitude proportional to the apparent weight $M_L$, $M_R$ in a range where the apparent weight $M_L$, $M_R$ is equal to or less than a predetermined value $M_1$, for example. The value of the integral correction value $K_i$ when the apparent weight $M_L$, $M_R$ is equal to the predetermined value $M_1$ is set to a predetermined value A. When the apparent weight $M_L$, $M_R$ exceeds the predetermined value $M_1$, the value of the integral correction value $K_i$ is set to the predetermined value A. The value of the integral correction value $K_i$ set here is used by the FB control unit 13 when a use condition determined by the condition determination unit 23 is satisfied. The value of the integral correction value $K_i$ corresponding to the apparent weight $M_L$ is reflected in an integral control input value of the left wheel 5L, and the value of the integral correction value $K_i$ corresponding to the apparent weight $M_R$ is reflected in an integral control input value of the right wheel 5R.

The condition determination unit 23 determines the use condition for the integral correction value $K_i$ corresponding to the apparent weight $M_L$, $M_R$ set by the setting unit 22. Here, for example, it is determined whether an actual wheel speed is smaller than a sum of a reference wheel speed (or a target wheel speed) and a predetermined operation threshold value. When the actual wheel speed is smaller than the sum of the reference wheel speed and the predetermined operation threshold value, it is determined that the use condition for the integral correction value $K_i$ set by the setting unit 22 is satisfied.

The traction operation determination unit 25 determines whether it is necessary to perform the driving force control (traction control) of the vehicle 1 by the FB control unit 13 and the FF control unit 26. Here, for example, an execution condition for the traction control is determined based on a required torque and an actual wheel speed. The required torque is calculated based on an accelerator opening degree, a brake pedal stroke, a steering angle, a vehicle speed, and the like. To the execution condition for the traction control which is determined here, a known control condition can be applied.

The FF control unit 26 performs feedforward control for calculating instruction torques of the left and right motors 2 based on the required torque when the execution condition for the traction control is satisfied. Here, the instruction torques of the left and right motors 2 are set such that an output corresponding to at least the required torque is obtained. The instruction torques set by the FF control unit 26 may include, for example, a controlled variable for suppressing vibration due to the interference of the left and right motors 2 and suppressing slipping of the left and right wheels 5. Known feedforward control related to the driving force of the vehicle 1 can be applied to specific control contents in the FF control unit 26.

The FB control unit 13 performs feedback control for correcting an instruction torque such that a difference (wheel speed deviation) between an actual wheel speed and a target wheel speed decreases when the execution condition for the traction control is satisfied. The FB control unit 13 of the present embodiment includes the P control unit 27 that calculates a correction amount proportional to the wheel speed deviation, and the I control unit 28 that calculates a correction amount corresponding to an integral value of the wheel speed deviation. The value of the integral correction value $K_i$ calculated by the correction value calculation unit 11 is used for calculation of the correction amount by the I control unit 28. Known feedback control related to the driving force of the vehicle 1 can be applied to specific control contents in the FB control unit 13.

4. Effect

(1) The vehicle control device 10 of the present example performs feedback control for reducing a difference between an actual wheel speed and a target wheel speed, using a plant model including a driving side inertia moment calculated based on an inertia moment $J_M$ of the motor 2 that is a drive source of the vehicle 1, a spring damper designed with a rigidity and a viscosity, and a load side inertia moment having a magnitude corresponding to a vehicle body weight M of the vehicle 1. The vehicle control device 10 includes the calculation unit 21 that calculates load side inertia moment $J_{LW}$, $J_{RW}$ based on a motor torque and a motor angular velocity or a wheel speed, and the setting unit 22 that sets a correction value of the feedback control in accordance with the load side inertia moment $J_{LW}$, $J_{RW}$. In this manner, by calculating the load side inertia moment $J_{LW}$, $J_{RW}$ using the motor torque, and the motor angular velocity or the wheel speed, the load side inertia moment $J_{LW}$, $J_{RW}$ can be accurately obtained even when it is difficult to ascertain a change in an actual slip ratio $\lambda$ (for example, during execution of feedback control in which a driving torque is suppressed). Thereby, it is possible to immediately ascertain a change in a friction coefficient of a road surface on which the vehicle 1 is traveling, and for example, when the actual slip ratio $\lambda$ changes from a low state to a high state, the suppression of the driving torque can be released at an early stage. Thus, the responsiveness of the feedback control can be enhanced. For example, when the actual slip ratio $\lambda$ is maintained in a low state, the suppression of the driving torque can be stably continued. Thus, the stability of the feedback control can be maintained.

(2) The value of the load side inertia moment $J_{LW}$, $J_{RW}$ calculated by the calculation unit 21 of the present embodiment has a characteristics of increasing as the friction coefficient of the road surface increases and decreasing as the friction coefficient of the road surface decreases to approach the inertia moments (left wheel inertia moment $J_{Lt}$, right wheel inertia moment $J_{Rt}$) of the wheel 5. Based on the characteristics, the setting unit 22 increases the integral correction value $K_i$ as the load side inertia moment $J_{LW}$, $J_{RW}$ is larger. In this manner, the responsiveness of the feedback control can be enhanced by making the integral control input value in the feedback control more likely to fluctuate greatly as the friction coefficient of the road surface is larger.

(3) The calculation unit 21 of the present example calculates the load side inertia moment $J_{LW}$, $J_{RW}$ based on Equations 5 and 6 described above. Thereby, it is possible to accurately calculate the values of the load side inertia moment $J_{LW}$, $J_{RW}$. The differential value of the left driving side angular velocity $\omega_{Lds}$ and the differential value of the right driving side angular velocity $\omega_{Rds}$ included in the numerators of the right sides in Equations 5 and 6 can be immediately obtained from the motor angular velocities $\omega_{LM}$ and $\omega_{RM}$ detected by the resolver 17. Thus, changes in the load side inertia moments $J_{LW}$ and $J_{RW}$ can be immediately ascertained, and the responsiveness of the feedback control can be improved.

(4) The control device 10 of the present embodiment can be provided with the slip calculation unit that calculates a slip state of the vehicle 1, and the slip calculation unit can calculate the actual slip ratio $\lambda_L$, $\lambda_R$ of the left or right wheel 5. The setting unit 22 can set appropriate an integral correction values $K_i$ corresponding to the actual slip ratio $\lambda_L$, $\lambda_R$ based on Equation 7, Equation 8 and Fig. 7 described above and perform feedback control. For example, the apparent weight $M_L$, $M_R$ of the wheel 5 and the drive system corresponding to the actual slip ratio $\lambda_L$, $\lambda_R$ can be calculated, and integral correction value $K_i$ having a magnitude corresponding to the apparent weight $M_L$, $M_R$ can be set. With such a configuration, the responsiveness of the feedback control can be enhanced.

(5) The setting unit 22 of the present embodiment calculates an apparent weights $M_L$, $M_R$ of the wheel 5 and the drive system corresponding to the load side inertia moment $J_{LW}$, $J_{RW}$ based on Equations 7 and 8 described above, and sets integral correction value $K_i$ having a magnitude corresponding to the apparent weight $M_L$, $M_R$. Thereby, it is possible to perform feedback control by assigning the respective appropriate integral correction values $K_i$ to the left wheel 5L and the right wheel 5R. Thus, the responsiveness of the feedback control can be enhanced.

(6) As illustrated in Fig. 7, the setting unit 22 of the present embodiment sets the integral correction value $K_i$ having a magnitude proportional to the apparent weight $M_L$, $M_R$ in a range where the apparent weight $M_L$, $M_R$ is equal to or less than a predetermined value $M_1$. As described above, by gradually increasing the integral correction value $K_i$ with respect to the increase in the apparent weight $M_L$, $M_R$, it is possible to suppress an excessive sudden change in the integral control input value while enhancing the responsiveness of the feedback control, and to enhance the stability of the feedback control.

5. Others

The foregoing example is merely exemplary and is not intended to exclude the application of various modifications and techniques which are not explicitly described in the present embodiment. Also each configuration of the embodiments can be selected or omitted according to the requirement, or can be combined appropriately.

In the above embodiment, the vehicle control device 10 applied to the rear wheels of the vehicle 1 has been exemplified. However, a similar vehicle control device may be applied to the front wheels, or a similar vehicle control device may be applied to both the front and rear wheels. At least in the vehicle 1 including the vehicle control device 10 that controls driving forces of the left drive system and the right drive system, it is possible to achieve the same effects as those of the above embodiment by performing the same control as that of the above embodiment.

In the above embodiment, the vehicle 1 on which the pair of motors 2 is mounted as the drive source has been exemplified. However, an internal combustion engine may be applied instead of the motors 2, and a specific type of the drive source is irrelevant. Although the vehicle 1 including the vehicle drive device (DM-AYC device) including the pair of motors 2 and the power distribution mechanism 3 has been exemplified, the present invention is also applicable to, for example, a vehicle without the power distribution mechanism 3 and an in-wheel motor vehicle. As illustrated in Figs. 5A and 5B, a vehicle that performs feedback control using a plant model including a driving side inertia moment, a spring damper, and a load side inertia moment can perform control similar to that in the above embodiment, and can acquire actions and effects similar to those in the above embodiment.

In the above example, the integral correction value $K_i$ among the feedback controlled variables is set in accordance with the load side inertia moment $J_{LW}$, $J_{RW}$, but other correction values used in the feedback control may be set in accordance with the load side inertia moment $J_{LW}$, $J_{RW}$. For example, a proportional correction value of the feedback control may be increased as the load side inertia moment $J_{LW}$, $J_{RW}$ are larger. Alternatively, a differential correction value of the feedback control may be decreased as the load side inertia moment $J_{LW}$, $J_{RW}$ is larger. The responsiveness of the feedback control can be enhanced at least by setting the correction value of the feedback control in accordance with the load side inertia moment $J_{LW}$, $J_{RW}$.

In implementing the vehicle control device according to the present invention, a driving force control method described in the following references can be referred to.

· Hiroshi Fujimoto, Takeshi Takano, Hidetoshi Nobumoto, and Toshimi Okazaki, "Driving Force Control Method Based on High Accuracy Slip Ratio Control", Mazda Technical Review, No. 32, pp. 228-233 (2015)
·Hiroshi Fujimoto, Junya Amada, and Takayuki Miyajima, "Development and Control of Electric Vehicle with Variable Drive Unit System", Proceedings of the 2013 JSAE Annual Spring Congress, No. 8-13, pp. 17-20 (2013)
· Masataka Yoshimura and Hiroshi Fujimoto, "Driving Torque Control Method for Electric Vehicle with In-Wheel Motors", Transactions of the Institute of Electrical Engineers of Japan. D, Vol. 131, No. 5, pp. 721-728 (2011)

[Industrial Applicability]

The present invention can be used in the manufacturing industry of a vehicle control device mounted on a vehicle, and can also be used in the manufacturing industry of a vehicle on which a vehicle control device is mounted.

[Reference Signs List]

| | |
|---|---|
| 1 | Vehicle |
| 2 | Motor |
| 3 | Power distribution mechanism |
| 4 | Axle |
| 4L | Left axle |
| 4R | Right axle |
| 5 | Left and right wheels (wheels) |
| 5L | Left wheel |
| 5R | Right wheel |
| 6 | Inverter |
| 7 | Battery |
| 10 | Vehicle control device |
| 11 | Correction value calculation unit |
| 12 | Control unit |
| 13 | FB control unit |
| 14 | Accelerator opening sensor |
| 15 | Brake sensor |
| 16 | Steering angle sensor |
| 17 | Resolver |
| 18 | Wheel speed sensor |
| 21 | Calculation unit |
| 22 | Setting unit |
| 23 | Condition determination unit |
| 24 | LPF (Low-Pass Filter) |
| 25 | Traction operation determination unit |
| 26 | FF control unit |
| 27 | P control unit |
| 28 | I control unit |

**Claims**

1. A vehicle control device that performs feedback control for reducing a difference between an actual wheel speed and a target wheel speed, using a plant model including a driving side inertia moment calculated based on an inertia moment of a motor that is a drive source of a vehicle, a spring damper designed with a rigidity and a viscosity, and a load side inertia moment having a magnitude corresponding to a vehicle body weight of the vehicle, the vehicle control device comprising:

   a calculation unit that calculates the load side inertia moment based on a motor torque, and a motor angular velocity or a wheel speed; and
   a setting unit that sets a correction value of the feedback control in accordance with the load side inertia moment.

2. The vehicle control device according to claim 1, wherein
   the setting unit increases an integral correction value as the load side inertia moment is larger.

3. The vehicle control device according to claim 1, wherein
   the calculation unit calculates the load side inertia moment based on the motor torque, the motor angular velocity, and the wheel speed.

4. The vehicle control device according to claim 1, further comprising

   a slip calculation unit that calculates a slip state of the vehicle,
   wherein the setting unit sets an integral correction value in accordance with the slip state.

5. The vehicle control device according to claim 1, wherein
   the setting unit calculates an apparent weight of a wheel and a drive system corresponding to the load side inertia moment, and sets an integral correction value having a magnitude corresponding to the apparent weight.

6. The vehicle control device according to claim 5, wherein
   the setting unit sets an integral correction value having a magnitude proportional to the apparent weight in a range where the apparent weight is equal to or less than a predetermined value.

7. A vehicle control method of performing feedback control for reducing a difference between an actual wheel speed and a target wheel speed, using a plant model including a driving side inertia moment calculated based on an inertia moment of a motor that is a drive source of a vehicle, a spring damper designed with a rigidity and a viscosity, and a load side inertia moment having a magnitude corresponding to a vehicle body weight of the vehicle, the vehicle control method comprising:

   calculating the load side inertia moment based on a motor torque, and a motor angular velocity or a wheel speed; and
   setting a correction value of the feedback control in accordance with the load side inertia moment.

# Fig. 1

# Fig. 2

# Fig. 3

# Fig. 4

# Fig. 5 A

Left drive system model (Two-inertia system model)

| Driving side inertia moment | Spring damper | Load side inertia moment |
|---|---|---|

$\dot{\omega}_{Lds}$     $\dot{\omega}_{LW}$

$T_{Lds}$    $T_{Lds}$

$T_{Lin}$   $J_{LM}$      $J_{LW}$   $T_{Lresist}$

$K_S, D_S$

$$J_{LM} = \{(b_2+1)^2+b_1{}^2\}\cdot G^2\cdot J_M - \{b_1(b_1+1)+b_2(b_2+1)\}\cdot G^2\cdot J_M\cdot\frac{\dot{\omega}_{Lds}}{\dot{\omega}_{Rds}}$$

$$J_{LW} = \frac{T_{Lin} - J_{LM}\,\dot{\omega}_{Lds}}{\dot{\omega}_{LW}} = J_{Lt} + M(1 - \lambda_L)\cdot r^2$$

# Fig. 5 B

Right drive system model (Two-inertia system model)

| Driving side inertia moment | Spring damper | Load side inertia moment |
|---|---|---|

$\dot{\omega}_{Rds}$     $\dot{\omega}_{RW}$

$T_{Rds}$    $T_{Rds}$

$T_{Rin}$   $J_{RM}$      $J_{RW}$   $T_{Rresist}$

$K_S, D_S$

$$J_{RM} = \{(b_1+1)^2+b_2{}^2\}\cdot G^2\cdot J_M - \{b_1(b_1+1)+b_2(b_2+1)\}\cdot G^2\cdot J_M\cdot\frac{\dot{\omega}_{Rds}}{\dot{\omega}_{Lds}}$$

$$J_{RW} = \frac{T_{Rin} - J_{RM}\,\dot{\omega}_{Rds}}{\dot{\omega}_{RW}} = J_{Rt} + M(1 - \lambda_R)\cdot r^2$$

# Fig. 6

# Fig. 7

## INTERNATIONAL SEARCH REPORT

| International application No. |
| --- |
| **PCT/JP2024/026849** |

### A. CLASSIFICATION OF SUBJECT MATTER

***B60L 15/20***(2006.01)i
FI:   B60L15/20 J

According to International Patent Classification (IPC) or to both national classification and IPC

### B. FIELDS SEARCHED

Minimum documentation searched (classification system followed by classification symbols)

B60L15/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2016/093102 A1 (NTN CORPORATION) 16 June 2016 (2016-06-16) | 1-7 |
| A | WO 2012/117518 A1 (SUZUKI KABUSHIKI KAISHA) 07 September 2012 (2012-09-07) | 1-7 |

☐ Further documents are listed in the continuation of Box C.      ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 October 2024** | **15 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/026849**

| Patent document cited in search report | Publication date (day/month/year) | Patent family member(s) | Publication date (day/month/year) |
|---|---|---|---|
| WO 2016/093102 A1 | 16 June 2016 | JP 2016-111834 A | |
| WO 2012/117518 A1 | 07 September 2012 | CN 103517842 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• JP 2019103249 A

### Non-patent literature cited in the description

• **HIROSHI FUJIMOTO** ; **TAKESHI TAKANO** ; **HIDE-TOSHI NOBUMOTO** ; **TOSHIMI OKAZAKI**. Driving Force Control Method Based on High Accuracy Slip Ratio Control. *Mazda Technical Review*, 2015 (32), 228-233

• **HIROSHI FUJIMOTO** ; **JUNYA AMADA** ; **TAKAYUKI MIYAJIMA**. Development and Control of Electric Vehicle with Variable Drive Unit System. *Proceedings of the 2013 JSAE Annual Spring Congress*, 2013 (8-13), 17-20

• **MASATAKA YOSHIMURA** ; **HIROSHI FUJIMOTO**. Driving Torque Control Method for Electric Vehicle with In-Wheel Motors. *Transactions of the Institute of Electrical Engineers of Japan. D*, 2011, vol. 131 (5), 721-728